# EUROPEAN PATENT SPECIFICATION

(11) **EP 2 691 257 B1**
(45) Date of publication and mention of the grant of the patent: **06.12.2017**
(21) Application number: 12765697.3
(22) Date of filing: 29.03.2012
(51) Int. Cl.: B60M 1/34, B60L 5/34, B60L 5/40, B60M 7/00

(54) **TRACK-RELATED MATERIAL STRUCTURE**
STRUKTUR FÜR EIN SPURMATERIAL
STRUCTURE DE MATIÈRE DE VOIE

(30) Priority: 31.03.2011 SE 1150280
(43) Date of publication of application: 05.02.2014
(73) Proprietor: Elways AB, 171 60 Solna (SE)
(72) Inventor: ASPLUND, Gunnar, S-171 60 Solna (SE)
(74) Representative: Groth & Co. KB
(86) International application number: PCT/SE2012/050347
(87) International publication number: WO 2012/134386

(56) References cited:
- WO-A1-94/10020
- WO-A1-2010/140964
- FR-A2- 2 403 254
- US-A- 413 294
- US-A- 4 083 439
- US-A- 5 464 082

## Description

The present invention relates to a track-related material structure intended to form one or more parallel wall portions within an elongate track, where the track is provided with an electrical conductor for the transfer of current by contact with a vehicle-associated current collector and an earth connection. The present invention also concerns a track construction comprising such a material structure and a device for the draining of water from the track construction.

### Technical Background of the Invention

A system for electrical propulsion of a vehicle along a road is known from WO 2010/140964. This system has electrical conductors in the form of energisable rails embedded in elongate tracks or canalisations in the road. The vehicle has a current collector that, upon contact with the rail, allows transfer of electric current between the rail and the vehicle, in order to drive the electric motor of the vehicle and, in such a way, also the vehicle. At the upper edge of the track closest to the roadway, a connection to earth potential is arranged.

The road will at all times be exposed to prevailing weather, which means that during periods of rain and a time after that, the road will be wet. By virtue of the inclination of the road, water will then run down and be accumulated in the track. After that, the water will be ejected out of the track by passing vehicles by the fact that the current collector occupies a large part of the track. A part of the water will later run back down into the track, whereupon the ejection is repeated at each passage of vehicles having a current collector.

When the track is filled with water, the situation arises that the resistance to the earth potential decreases, which leads to short circuit of the circuit because of leakage currents from the rail to the earth connection. This gives rise to significant power losses or in the worst case overload of the electrical supply of the vehicles.

The system according to WO 2010/140964 embraces a test or supervision circuit, which measures the resistance to the earth potential. In case the leakage currents become too large, i.e., if the resistance becomes too low, the voltage to the rail is immediately disconnected. As long as the weather situation remains, the voltage will be disconnected and passing vehicles get no power supply. Therefore, in locations exposed to the elements with much and frequent precipitation, the system will be out of action for long periods of time.

Therefore, there is a need of developing track constructions that allow energising of the electrical conductors also in wet weather, thereby minimising the periods when current cannot be delivered.

### Summary of the Invention

The object of the present invention is to provide an insulating material structure that can guarantee energising of an electrical conductor of a track construction also when the track construction is filled with water in connection with wet weather.

This is achieved by a track-related material structure according to claim 1, intended to form at least one wall portion within an elongate track or a slot along one or more road sections forming a stretch of road, where the track at its end portion arranged against the roadway of the stretch of road is assigned an earth connection and at its lower end portion facing from the roadway is assigned one or more electrically current-feedable and energisable conductors, the electrically insulating material structure being oriented to one wall portion of the track, or opposed wall portions, and arranged to electrically and mechanically co-operate with said earth connection. The electrical co-operation may be described by means of an imaginary circuit where the electrically insulating material structure is a resistance arranged between the electrical conductor and the earth connection.

By allowing the electrically insulating material structure to be oriented to the wall portions of the track, where it co-operates electrically and mechanically with the earth connection, an efficient electrical insulation is achieved between the electrical conductor and the earth connection. In such a way, the resistance of the material structure can be retained and the presence of leakage currents is minimised, also when the track is filled with water.

The at least one surface of the material structure, the one facing the centre of the track, has a roughened microstructure. Within the scope of the present invention, the term roughing should be interpreted as a treatment of a surface that results in the formation of microscopic elevations and/or recesses of the surface. The way in which the roughing is carried out is inessential, as long as the microscopic elevations and/or the recesses are provided. The microstructure mimics the surface of the petals of a lotus flower being covered by very thin hairs or papillae and a wax layer. This gives very high water repellency, also called superhydrophobicity, which further contributes to improved electrical insulation. Upon repeated passages, the current collectors of the vehicles will scratch or scrape up the material structure. The resulting scratches cause water to be retained in the material structure by the capillary forces. By providing a roughened microstructure, the capillary forces are counteracted by the lotus effect.

In a preferred embodiment, the material structure is coated with or consists of a water-repellent (hydrophobic) material. This makes that the water in the track is prevented from forming a conductive membrane on the surface of the material structure, which could give rise to leakage currents. Thereby, the insulation between the electrical conductor and the earth connection is additionally strengthened.

In a further embodiment, the microstructure is allocated a surface roughness having a mean surface deviation (Rₐ) in the range of 5-30 µm, more preferred 10-20 µm. This is provided by the elevations of the microstructure having a height of between 10 and 20 µm and/or a width of between 10 and 15 µm, which corresponds to the size of the papillae of the lotus flower. The distance between adjacent elevations falls within the range of 10-30 µm.

In a preferred embodiment, the material structure is treated with a water-repellent lubricant. The lubricant corresponds to the wax layer of the lotus flower and contributes to raising the hydrophobicity. In an alternative embodiment, the lubricant comprises silicone oil.

In another preferred embodiment, the material structure consists of a hydrophobic plastic material, such as polytetrafluoroethylene (PTFE) or polyethylene.

In a further embodiment, the stretch of road has two parallel tracks or slots.

In an alternative embodiment, the resistance of the material structure and the resistance of an accumulation of water in said track or slot are connected in parallel and subject to a resistance measurement in order to confirm that the resistance value exceeds a predetermined value. Furthermore, the electrical conductor is current-feedable and energisable only on condition that said resistance value exceeds the predetermined value. Thus, it is guaranteed that the circuit between the electrical conductor and the earth connection is not short-circuited, in case that the resistance becomes too low.

The present invention also concerns a track construction comprising an electrically insulating material structure.

In a preferred embodiment, the at least one wall portion of the track comprises a through-going opening, which is in communication with a collection device comprising a drainage pipe for draining an accumulation of water in the track. In a further embodiment, the opening is provided with a filter.

In an alternative embodiment, the collection device and the drainage pipe comprise or consist of an electrically insulating material.

In another embodiment, the drainage pipe comprises means for heating and a thermally insulating casing.

### Brief Description of the Drawings

Figures 1, 1A and 1B show in a perspective view vehicles propellable on a road section comprising a track construction and a material structure according to the present invention.
Figure 1C schematically shows two vehicle-related energy sources and a third source of energy external to the vehicle.
Figure 1D shows a power/time diagram (P/t) illustrating the passage of the vehicle along a roadway, its stretch of road and its road section.
Figure 2 schematically shows a vehicle-related electrical arrangement.
Figure 3 shows in an end view a vehicle, having a downwardly directed contact means in a co-operation with energisable electrical conductors assigned to the road section.
Figure 4 schematically shows an electrical arrangement for a number of road sections.
Figure 5 shows a cross-section of a track construction having an electrically insulating material structure according to the present invention.
Figure 6 shows a track construction having an electrically insulating material structure according to the present invention in a perspective view.
Figure 7 shows an outline of a drop of water on an ideal solid surface in cross-section.
Figure 8 shows a cross-section of a drop of water on the surface of a petal of the lotus flower.
Figure 9 shows a test circuit connected in parallel for resistance measurement of the resistances of the material structure and an accumulation of water, respectively.
Figure 10 shows a road section having a track construction according to the present invention with drainage of water from the centre portion of the road section toward the ditch.
Figure 11 shows a cross-section of a track construction having a collection device according to the present invention.
Figure 12 shows a cross-section of a drainage pipe belonging to the collection device.

### Detailed Description of the Invention

The electrically insulating material structure will be described below in more detail with reference to the figures. However, the invention should not be considered limited to the embodiment or embodiments shown in the figures and described below, but may be varied within the scope of the claims.

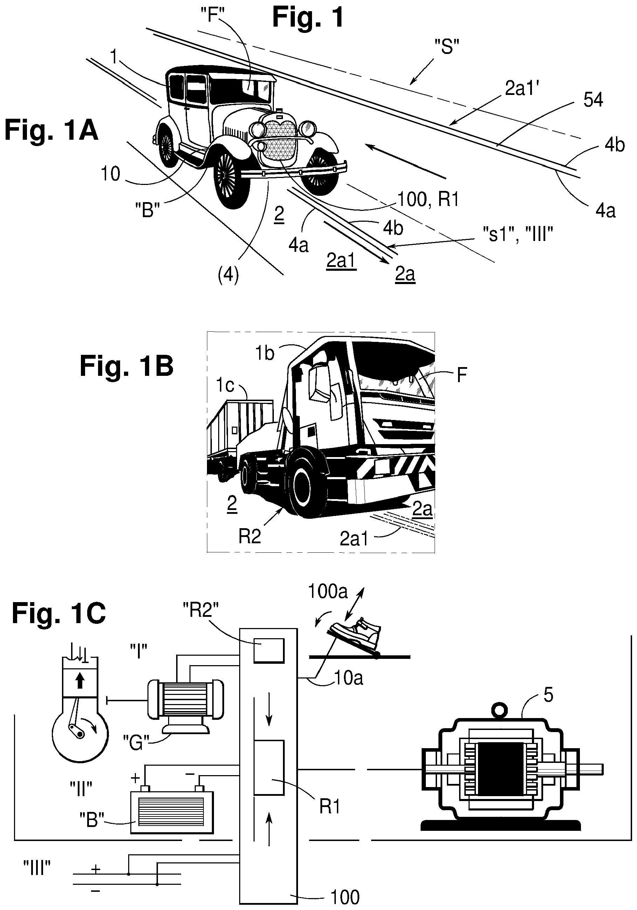

Accordingly, Figure 1A shows a system "S" adapted for the conveyance of an electric vehicle 1, propellable by one or more batteries or a battery kit, along a stretch of road 2 and its road sections 2a1 as well as 2a1'.

Here, the vehicle 1 is exteriorly an "A-Ford", but here, the same is converted to a battery-operated vehicle, with a continuous access to an external, a third, source of energy, here designated "s1", "III".

The vehicle 1 should then comprise a controlling arrangement 3 (not shown) or control equipment, so that a driver "F" (not shown) can convey and control the vehicle 1 along said stretch of road 2 and its road section 2a1.

The vehicle 1 could also embrace a gearbox and other parts and details that are required for the conveyance of the vehicle, but since these parts are well known to a person skilled in the art, these will not be described in detail.

However, an electrically driven vehicle 1 does not need any gearbox, since a speed regulation and a power output can be effected via known electrical and electronic circuits.

Figure 1B shows, in the same way as in Figure 1A, an electrically propellable lorry 1b, having a coupled trailer 1c, along the stretch of road 2, 2a and its assigned road section 2a1.

Figure 1C now clearly shows two vehicle-related and vehicle-associated energy sources, here designated "I" and "II", a "first" in the form of a diesel generator "G", a "second" in the form of a battery or a battery kit "B", and a "third" source of energy "III" in the form of a source of energy oriented externally to the vehicle, here formed as, via connection means or switches, energisable parallel conductors or rails within the road sections, recessed in tracks and a cavity along the roadway or the whole stretch of road 2.

In Figure 1C, these are co-ordinated to a vehicle-related control circuit 100, which, depending on a supplied power to an electric driving motor 5, allows selecting all or a combination of the powering energy sources "I", "II" and "III", respectively. Here, the power regulation is illustrated as an accelerator pedal 100a, the movement of which up and down is connected to an actuation circuit "R2" within the control circuit 100, which in turn embraces a circuit "R1" distributing power and energy between the energy sources.

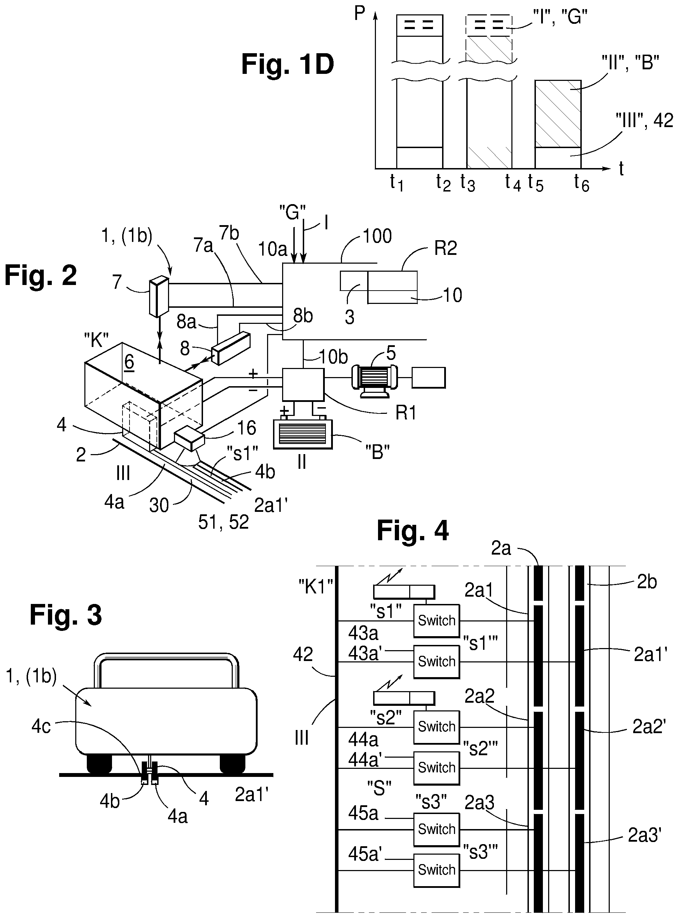

Figure 1D illustrates in a P/t (power/time)-diagram how a full power or reduced powers could be distributed and transferred for the passage of the vehicle along the different road sections 2a1 of a roadway or stretch of road 2 by means of the circuit "R1" and the actuation circuit "R2".

Between the instants of time t₁-t₂, it is illustrated, in principle, how a full power output from the three energy sources "I", "II" and "III" can be realised, with the power output from the energy source "I" illustrated on top, the power output from the energy source "II" illustrated thereunder (slanting lines), and the power output from the energy source "III" illustrated at the bottom.

Between the instants of time t₃-t₄, there is illustrated, in principle, a reduced power output from the energy sources "I" and "II", while here, the energy source "III" is illustrated disconnected.

Between the instants of time t₅-t₆, there is illustrated, in principle, a reduced power output from the energy sources "II" and "III".

During this time duration t₅-t₆, full power can be drawn from the energy source "II" and a small surplus can be allowed to trickle charge the battery kit "II", "B".

The battery kit "B" and the second energy source "II", but particularly the third energy source "III" should primarily, via the distributing circuit "R1", feed the motor 5, and for this purpose, it is required that the battery kit "II", "B" has accumulated an energy and in other respects is dimensioned to drive the motor 5 at full power.

The battery kit "II"; "B" should primarily be trickle charged via the energy source "III"; "s1" and secondary be trickle charged or charged via the energy source "I", "G".

The energy or power from the energy sources "I" and "III" can be selected to be 5-30 % of the energy or power assigned to the energy source "II"; "B", such as about 25 %.

The supply voltage to the motor 5 can be selected to be +400 V DC and - 400 V DC, i.e., the voltage value 800 V DC.

The proposed system "S" should then primarily comprise one or more, via each an electric motor 5 or motors, electrically propellable vehicles 1, 1b, and where the respective vehicle has a power-distributing and/or power-regulating control loop "R1" within the control circuit 100, for the provision of a requisite power and/or a speed regulation via the actuation circuit "R2" and the accelerator pedal 100a.

The requisite output power should be provided primarily by the vehicle's internal energy source "II"; "B" and that secondary should be under trickle charging from the third energy source "III"; "s1". The stretch of road 2 is shown divisible into road sections (2a1, 2a2, 2a3; 2a1', 2a2', 2a3'), where each one advantageously should be assigned an external source of energy "III", here illustrated as a number of electrical stations "s1".

One or both of the vehicle's external third energy source "III"; "s1" and/or the vehicle-associated first energy source "I"; "G" can be utilised, in order to thereby supplementary charge the battery kit "II"; "B" of the vehicle, during an adapted sequence of time of power output from this battery kit.

In addition to a driving of the vehicle 1 via the battery kits "II"; "B" and during a supplementing charging of the battery kit "II"; "B" along the road sections and the stationary electrical stations "s1" or the third energy source "III", for the conveyance of the vehicle 1 across the road section 2a1, a requisite additional power and energy may be supplied via the vehicle-associated energy source "I"; "G".

Figure 2 shows principally an electrical/mechanical connection arrangement "K" related to a vehicle 1, (1b) with a schematically shown vehicle-related arrangement in the form of a control equipment 10, in order to direct a vehicle-associated connector or current collector 4 against and to an electrical contact with paired energisable lines, in the form of rails 4a, 4b, for a possible common parallel operation of an electric motor 5, from the battery kit "II"; "B" and/or from the stationary station "III"; "s1", and/or from the diesel generator "I"; "G".

Here, the current collector 4 is related to a support 6, which vertically is movably arranged up and down via a first electric auxiliary motor 7 and laterally is movably arranged to and fro via a second electric auxiliary motor 8.

The means and the control of the auxiliary motors 7, 8 that are required for this movement by means of sensors are not shown in detail but are, however, in principle previously known and obvious to a person skilled in the art.

The auxiliary motor 7 and the auxiliary motor 8 are both actuatable in a reciprocating movement, where a first movement is activated via a first signal on a first conductor 7a and a first signal on a first conductor 8a, respectively, whereas a second (opposite) movement is activated via a second signal on the conductor 7a and 8a, respectively, while the instantaneous setting positions of the motors 7, 8 and carrier 6 are evaluated by one or more sensors (not shown) and indicated via a produced signal on a second line or conductor 7b and 8b, respectively.

These signals on the first conductors 7a, 8a are generated in a central processing unit or control circuit 100 by a control equipment 10, and signals on the second conductors 7b and 8b are produced within the same central processing unit 100, while utilising position sensors (not shown).

The central unit 100 including the control equipment 10 is a complex unit, which, among other things, via a sensor 16 should be able to detect the presence of and the orientation of the conductors 4a, 4b, and after that lower the current collector 4, via the auxiliary motor 7, to an electrical contact with said conductors 4a, 4b, which here are illustrated as energised or vice versa.

Via a connection 10a to the central unit 100 and the actuation circuit "R2" thereof, the power and energy, which via the circuit "R1" distributing the energy sources is fed to the motor 5, are regulated. For this purpose, it is required that the circuit "R1" is directly controlled by an accelerator pedal 100a (Figure 1C) in order to, via the actuation circuit "R2", supply requisite power to the motor 5.

In the shown state, the current collectors 4 conduct current and voltage from the energy source "s1";"III" to the power and energy-distributing circuit "R1". This one or an actuation circuit "R2" detects, via the central unit 100, the power requirement of the motor 5 and primarily feeds the motor 5 with the power it needs according to the input signal on the connection or line 10a and generated output signal on the connection or line 10b, and thereby the stationary system "s1", "III" should be loaded and supplement the power and energy requirements via the battery kit "II", "B".

A parallel connection of the vehicle's externally tapped-off power "III", "s1" and the vehicle's internally generated power "I", "G" and/or "II", "B" may here be realised via the control loops "R1" and "R2" and by means of the control circuit 100.

Via the line 10a, pieces of information about a desired speed and thereby associated power for the vehicle 1 are fed to the central unit 100, and via internal circuits (not shown) and the function "R2", "10", the circuit "R1" is activated via the line 10b.

Figure 3 shows, in an end view, a vehicle 1(1b) with its downwardly directed current collectors 4 in a mechanical and electrical co-operation with the two live conductors or rails 4a, 4b assigned to the road section 2a1', as well as an earth connection 4c.

Figure 4 shows an electrical connection arrangement "K1", wherein road sections after road sections 2a1, 2a2 and 2a3 and 2a1', 2a2', 2a3', respectively, which are electrically separated from each other, with their station after station "s1", "s2", "s3" and "s1"', "s2"', "s3"', respectively, can be activated and made live from one and the same parent charging source "III", 42, via connection means and switches 43a, 44a, and 45a for one road section 2a and 43a', 44a' and 45a' for the counter-directed road section 2b, as a vehicle 1 will pass along the road sections 2a, 2b, separated electrically but co-ordinated with longitudinal tracks.

For this, a number of switches or connection means are required for a connection and disconnection of the stations "s1", "s2" ... where this connection and disconnection can be effected via stationary sensors (not shown) related to the road section.

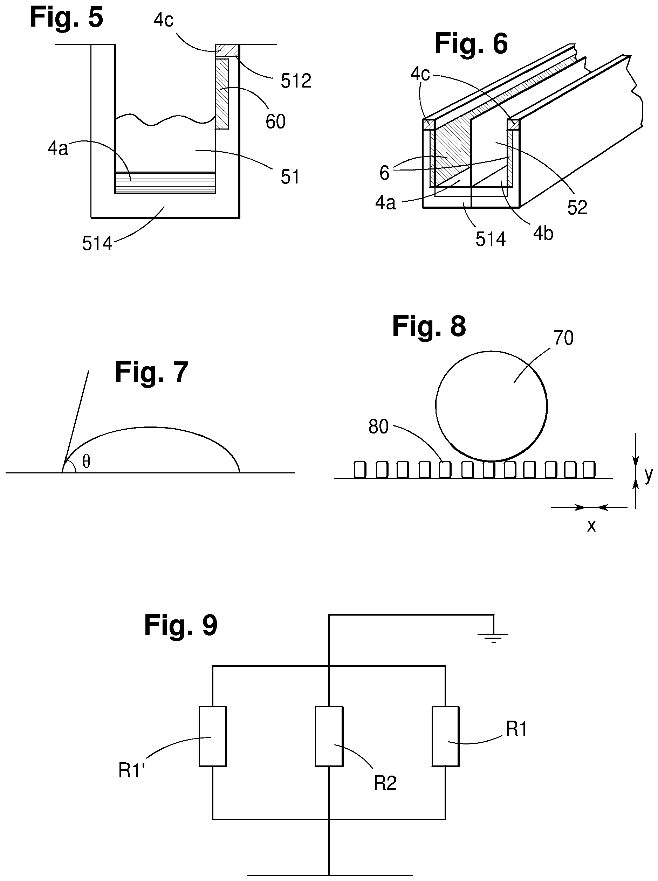

Figure 5 shows a cross-section of a track construction 51 according to the present invention. In the lower end portion 514 of the track 51, an electrical conductor 4a is embedded. The electrical conductor 4a is coupled to a feed station (not shown) that can be activated and made live, when a vehicle passes the road section in question. When the station is activated, the electrical conductor is energised so that current can be transferred to the vehicles by means of a vehicle-associated current collector. One or more earth connections 4c are arranged in the upper end portion 512 of the track, closest to the roadway of the road section.

An electrically insulating material structure 60 is oriented to one or both opposed wall portions of the track 51, between the embedded electrical conductor 4a and the earth connection 4c. The material structure co-operates electrically and mechanically to physically separate the electrical conductor 4a from the earth connection 4c, and provides an electrical insulation that prevents leakage currents between the electrical conductor 4a and the earth connection 4c.

The material structure 60 is adapted to partly extend along the distance between the upper and lower end portions 512, 514 of the track 51 and is arranged closest to the earth connection 4c. This is to guarantee electrical insulation also in the case when an accumulation of water partly fills the track 51. Alternatively, the material structure 60 may extend the entire distance.

Figure 6 shows a track construction exhibiting two parallel tracks 51, 52 having electrically insulating material structures 60 on the opposed wall portions of the track in a perspective view. The material structure 60 extends in the extension of the tracks 51, 52 in the longitudinal direction. Each track 51, 52 is assigned a respective electrical conductor 4a, 4b.

When water is ejected from the track by the current collectors of passing vehicles, the wall portions of the track 51 are exposed to repeated water showers, which are wetting the surface thereof and form a conductive water film. In the energising of the electrical conductor 4a of the track 51 during such conditions, the risk increases of undesired leakage currents arising between the electrical conductor 4a and the earth connection 4c. The wetting depends, among other things, on the water-repellent properties of the surface, its hydrophobicity.

A measure of the hydrophobicity of a surface is the contact angle. Figure 7 shows a drop of water on an ideal solid surface. The drop of water assumes broadly the shape of a truncated sphere. The contact angle θ is the angle formed between the drop of water and the surface. The degree of wetting, and thereby the contact angle of water, is determined by the relationship between adhesive forces between the drop of water and the surface, and cohesive forces inside the drop of water.

Generally, surfaces having a contact angle of water below 90° are considered hydrophilic, while surfaces having a contact angle of water above 90° are considered hydrophobic. Surfaces of high hydrophobicity manufactured from materials having low surface energy, for instance fluorinated materials, may have a contact angle of water as high as 110° to 130°, particularly around 120°.

The material structure 60 is preferably coated with or consists of a water-repellent (hydrophobic) material, preferably having a contact angle of water above around 100°, in order to prevent leakage currents when the material structure is wet in connection with rain and/or water accumulation in the track. Polytetrafluoroethylene (PTFE), also called Teflon®, or polyethylene are materials that have high hydrophobicity and are well suited for use in the material structure according to the present invention. However, the invention is not limited to these materials, but comprises also other water-repellent materials such as plastic, ceramics, glass, or polymers. In case the material structure comprises a plastic material or polymers, this may be reinforced with glass fibres to increase the stiffness.

Since polytetrafluoroethylene (PTFE) is a relatively expensive material, the cost of providing the track 51 with a material structure 60 consisting only of polytetrafluoroethylene (PTFE) will become very high. In a preferred embodiment, the track 51 is made from polyethylene, or another hydrophobic polymer, with a part of the wall portion of the track 51 coated with or assigned a material structure comprising polytetrafluoroethylene (PTFE).

When the temperature falls below 0 °C, road salt is often used to prevent slip. The salt makes that the freezing point of the road surface is lowered but simultaneously means that the conductivity of the water increases. Therefore, this also implies that very little wetting of the electrically insulating material structure 60 may lead to large leakage currents.

In order to counteract the increased conductivity, an increased hydrophobicity is required. A lotus flower will never be wet since the petals have a self-cleaning property that is called superhydrophobicity, the contact angle of water exceeding 150°. Drops of water are not allowed to wet the petal because of a complex microscopic and nanoscopic structure that minimises the adhesiveness.

Figure 8 shows a somewhat simplified cross-section of a drop of water 70 on the surface of a petal of the lotus flower. The surface of the petals is covered with very thin hairs or papillae 80 and a hydrophobic wax layer (not shown). This double structure decreases the contact surface between the drop of water 70 and the petal, which entails that the drop of water 70 approximately assumes the shape of a sphere. The papillae 80 have a height y of between 10 and 20 µm and/or a width x of between 10 and 15 µm. The distance between adjacent papillae 80 amounts to between 10 and 30 µm.

By providing the material structure 60 according to the present invention with a microstructure consisting of elevations and depressions of the same magnitude as the papillae of the lotus flower 80, the material structure can achieve very high hydrophobicity and thereby decrease the leakage currents.

The microstructure is achieved by roughing or scratching the surface by a tool suitable therefor, such as sandpaper, a steel brush, or a scrape. Sandpaper may be used to rough the surface in two different directions, for instance perpendicular to each other. This treatment may also be repeated at regular intervals after installation of the material structure 60 in the track 51. Also the vehicles' current collectors 4 conveyed in the track 51 contribute to rough or scratch the material structure 60. This wear does not affect the hydrophobicity of the material structure to a great extent. In roughing, also ends of glass fibres from reinforcement emerge, which further contributes to the elevations and depressions of the microstructure.

Surface roughness is a measurement unit for machining allowance of the smoothness or coarseness of a surface. It is usually defined as mean surface deviation Rₐ with the unit micrometre. The mean surface deviation Rₐ is calculated by taking the mean value of the absolute value of the vertical distance between a measuring point and a calculated baseline of the surface. In order to achieve sufficiently high hydrophobicity, the microstructure according to the present invention is preferably allocated a mean surface deviation Rₐ in the range of 5-30 µm, more preferred in the range of 10-20 µm.

This is provided by the elevations of the microstructure having a height of between 10 and 20 µm and/or a width of between 10 and 15 µm, which corresponds to the size of the papillae of the lotus flower. The distance between adjacent elevations falls within the range of 10-30 µm.

In order to further increase the hydrophobicity of the material structure 60, the material structure 60 may be treated with a water-repellent lubricant, for instance oil or grease. Silicone oil gives a very advantageous enhancement of the hydrophobicity, but also other types of oils or grease may be used. Examples of other suitable lubricants are silicone grease, lubricating grease, heavy grease, and oil-based or vegetable fats. The lubricant has also the advantage to protect the track against wear and facilitates the passage of the current collectors of the vehicles. In course of time, the lubricant may come to be removed after repeated vehicle passages, and therefore renewed supply of and treatment with lubricant may become necessary within predetermined time intervals, for instance once a year.

Figure 9 shows a schematic test circuit that is used to measure the resistance R1 of the material structure 60 and the resistance R2, respectively, of an accumulation of water in the track. The resistance measurement is carried out to establish if the resistance value exceeds or falls below a predetermined value. The two resistances R1 and R2 are connected in parallel to represent the way of a possible leakage current from the electrical conductor to the earth connection. As previously mentioned, the electrically insulating material structure may be assigned both the opposed wall portions of the track, which gives a third resistance R1' connected in parallel.

In case the leakage currents become too large, i.e., when the resistance value falls below the predetermined value, the voltage to the electrical conductor from the feed station will be switched off by means of a switch. This as a precautionary measure to prevent power losses and/or overload of the electrical supply.

The stretch of road 2a comprises a plurality of road sections 2a1, 2a2, 2a3. etc., each of which may have different inclination depending on substructure and terrain. In heavy rain and low traffic intensity, the situation arises that the track 51 is filled with water, after which the water follows the inclination of the road sections and is accumulated in a road section 2a1 that is situated lower than adjacent road sections. As discussed above, an accumulation of water means increased risks of leakage currents and short circuit between the electrical conductor 4a and the earth connection 4c.

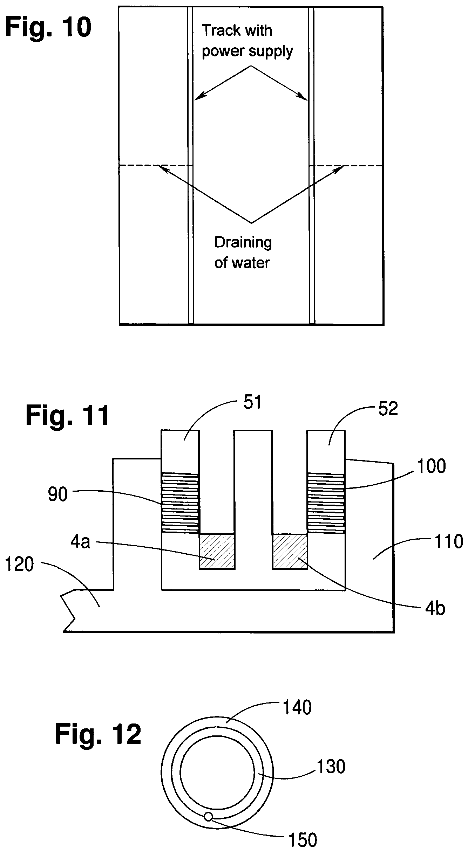

In order to eliminate this problem, drainage of water may be made on those parts of the stretch of road 2a and on those road sections 2a1 where the inclination decreases, and which are situated lower than adjacent road sections. The draining takes place laterally from the centre portion of the road and out toward the ditch. Figure 10 shows a road section having tracks with drainage of water from the centre portion of the road section toward the ditch.

Figure 11 shows a cross-section of a track construction according to the present invention. The at least one wall portion of the track 51 is formed with a through-going opening 90 connecting to a collection device 110. The collection device 110 surrounds the track 51 in the area around the opening 90 and allows draining of accumulated water in the track 51 through the opening 90. The collection device 110 comprises a drainage pipe 120, which extends from the track 51 toward the ditch bank of the road.

The opening 90 is preferably arranged near the lower end portion 514 of the track 51 in order to achieve an efficient draining. Alternatively, the opening 90 may also partly traverse the material structure 60, in case the same overlaps the area where the opening 90 traverses the track 51.

Preferably, the opening 90 is provided with a filter 101 to prevent large objects such as stones, brushwood or the like from coming along and causing blockages in the drainage pipe 120. If required, the filter 101 may be cleaned by, for instance, high-pressure flushing at regular intervals, for instance once a year.

Since the water in the track 51 may have a potential because of contact with the energisable electrical conductor 4a, the collection device 110 and the drainage pipe 120 are manufactured from an electrically insulating material, for instance plastic.

At temperatures below 0 °C, the water freezes and formation of ice in the collection device 110 may occur. In a preferred embodiment, the drainage pipe 120 comprises means for heating, for instance a heating cable 150, and is surrounded by a thermally insulating casing. Figure 12 shows a cross-section of a drainage pipe 120 that comprises an inner layer 130 made from an electrically insulating material. A heating cable 150 is arranged in the drainage pipe 120, adjacent to the inner layer 130. The inner layer is surrounded by an outer, thermally insulating layer 140 to prevent heat losses and make sure the heat is transferred to the water in the drainage pipe. The thermally insulating layer 130 may comprise foam plastic, glass wool, or other suitable materials.

## Claims

1. Track (51) comprising a material structure (60) forming at least one wall portion within the track (51), said track being elongated and adapted to be oriented along one or more road sections forming a stretch of road, wherein the track (51) at its upper end portion (512), which is adapted to be arranged at a roadway belonging to the stretch of road, comprises an earth connection (4c) and at its lower end portion (514) adapted to face from the roadway comprises one or more electrically current-feedable and energisable conductors (4a), where the material structure (60) is electrically insulating and arranged to electrically and mechanically co-operate with said earth connection (4c), **characterised in that** the at least one surface of the material structure (60) facing a centre portion of the track, has a roughened microstructure.

2. Track (51) according to claim 1, wherein the material structure (60) is coated with or consists of a water-repellent (hydrophobic) material.

3. Track (51) according to claim 1 or 2, wherein the microstructure has elevations and/or recesses having a height in the range of 10-20 µm.

4. Track (51) according to any one of the preceding claims, wherein the microstructure is allocated a surface roughness having a mean surface deviation (Rₐ) in the range of 10-20 µm.

5. Track (51) according to any one of the preceding claims, wherein the material structure (60) is treated with a water-repellent lubricant.

6. Track (51) according to claim 5, wherein the lubricant comprises silicone oil, silicone grease, lubricating grease, heavy grease, oil-based fats, or vegetable fats.

7. Track (51) according to any one of the preceding claims, wherein the material structure (60) consists of a hydrophobic plastic material, such as polytetrafluoroethylene (PTFE) or polyethylene (PE).

8. Track (51) according to any one of the preceding claims, wherein a resistance (R1) of the material structure and a resistance (R2) of an accumulation of water in said track (51) or slot should be connected in parallel and subject to a resistance measurement, in order to establish if the resistance value exceeds or falls below a predetermined value.

9. Track (51) according to claim 8, wherein said electrical conductors (4a) are current-feedable and energisable via a switch only on condition that said resistance value connected in parallel exceeds the predetermined value.

10. Track construction for a power supply of electrically propellable vehicles along a stretch of road, comprising a track (51) according to any one of the preceding claims.

11. Track construction according to claim 10, wherein the at least one wall portion of the track (51) comprises a through-going opening (90), which opening (90) is in communication with a collection device (110) comprising a drainage pipe (120) for draining an accumulation of water in the track (51).

12. Track construction according to claim 11, wherein the opening is provided with a filter (101).

13. Track construction according to claim 11 or 12, wherein the collection device (110) and the drainage pipe (120) comprise or consist of an electrically insulating material (130).

14. Track construction according to any one of claims 11-13, wherein the drainage pipe (120) comprises means (150) for heating and a thermally insulating casing (140).

15. Track construction according to any of claims 10-14 comprising two parallel tracks (51, 52) according to any of claims 1-9.

## Patentansprüche

1. Leitbahn (51), die eine Materialstruktur (60) umfasst, die mindestens einen Wandabschnitt innerhalb der Leitbahn (51) ausbildet, wobei die Leitbahn länglich ist und so ausgestaltet ist, dass sie entlang eines oder mehrerer Straßenabschnitte ausgerichtet ist, die eine Straßenstrecke bilden, wobei die Leitbahn (51) an ihrem oberen Endabschnitt (512), der so angepasst ist, dass er an einer zur Straßenstrecke gehörenden Fahrbahn angeordnet ist, eine Erdverbindung (4c) umfasst und an ihrem unteren Endabschnitt (514), der so angepasst ist, dass er von der Fahrbahn wegweist, einen oder mehrere elektrisch speisbare und bestrombare Leiter (4a) umfasst, wobei die Materialstruktur (60) elektrisch isolierend ist und so angeordnet ist, dass sie elektrisch und mechanisch mit der Erdverbindung (4c) zusammenwirkt, **dadurch gekennzeichnet, dass** die mindestens eine Oberfläche der Materialstruktur (60), die einem mittigen Abschnitt der Leitbahn zugewandt ist, eine raue Mikrostruktur aufweist.

2. Leitbahn (51) nach Anspruch 1, wobei die Materialstruktur (60) mit einem wasserabweisenden (hydrophoben) Material beschichtet ist oder aus einem solchen besteht.

3. Leitbahn (51) nach Anspruch 1 oder 2, wobei die Mikrostruktur Erhebungen und/oder Vertiefungen mit einer Höhe im Bereich von 10-20 µm aufweist.

4. Leitbahn (51) nach einem der vorhergehenden Ansprüche, wobei der Mikrostruktur eine Oberflächenrauigkeit mit einer mittleren Oberflächenabweichung (Rₐ) im Bereich von 10-20 µm zugewiesen ist.

5. Leitbahn (51) nach einem der vorhergehenden Ansprüche, wobei die Materialstruktur (60) mit einem wasserabweisenden Schmiermittel behandelt ist.

6. Leitbahn (51) nach Anspruch 5, wobei das Schmiermittel Silikonöl, Silikonfett, Schmierfett, schweres Fett, ölhaltige Fette oder Pflanzenfette umfasst.

7. Leitbahn (51) nach einem der vorhergehenden Ansprüche, wobei die Materialstruktur (60) aus einem hydrophoben Kunststoff wie Polytetrafluorethylen (PTFE) oder Polyethylen (PE) besteht.

8. Leitbahn (51) nach einem der vorhergehenden Ansprüche, wobei ein Widerstand (R1) der Materialstruktur und ein Widerstand (R2) einer Wasseransammlung in der Leitbahn (51) oder im Schlitz parallel geschaltet und einer Widerstandsmessung unterzogen werden sollten, um festzustellen, ob der Widerstandswert einen vorherbestimmten Wert überschreitet oder unterschreitet.

9. Leitbahn (51) nach Anspruch 8, wobei die elektrischen Leiter (4a) über einen Schalter nur unter der Bedingung speisbar und bestrombar sind, dass der parallel geschaltete Widerstandswert den vorherbestimmten Wert überschreitet.

10. Leitbahnaufbau für eine Stromversorgung elektrisch antreibbarer Fahrzeuge entlang einer Straßenstrecke, umfassend eine Leitbahn (51) nach einem der vorhergehenden Ansprüche.

11. Leitbahnaufbau nach Anspruch 10, wobei der mindestens eine Wandabschnitt der Leitbahn (51) eine durchgehende Öffnung (90) umfasst, wobei die Öffnung (90) mit einer Sammelvorrichtung (110) in Verbindung ist, die ein Ablassrohr (120) umfasst, um eine Ansammlung von Wasser aus der Leitbahn (51) abzulassen.

12. Leitbahnaufbau nach Anspruch 11, wobei die Öffnung mit einem Filter (101) versehen ist.

13. Leitbahnaufbau nach Anspruch 11 oder 12, wobei die Sammelvorrichtung (110) und das Ablassrohr (120) ein elektrisch isolierendes Material (130) umfassen oder aus einem solchen bestehen.

14. Leitbahnaufbau nach einem der Ansprüche 11 bis 13, wobei das Ablassrohr (120) Mittel (150) zum Beheizen und eine thermisch isolierende Ummantelung (140) umfasst.

15. Leitbahnaufbau nach einem der Ansprüche 10 bis 14, der zwei parallele Leitbahnen (51, 52) nach einem der Ansprüche 1 bis 9 umfasst.

## Revendications

1. Voie (51) comprenant une structure de matériau (60) formant au moins une partie de paroi dans la voie (51), ladite voie étant allongée et conçue pour être orientée le long d'une ou de plusieurs sections de route formant un tronçon de route, dans laquelle la voie (51) au niveau de sa partie d'extrémité supérieure (512), qui est conçue pour être disposée au niveau d'une chaussée appartenant au tronçon de route, comprend une connexion à la terre (4c) et, au niveau de sa partie d'extrémité inférieure (514) conçue pour être opposée à la chaussée, comprend un ou plusieurs conducteurs pouvant être excités et électriquement alimentés en courant (4a), où la structure de matériau (60) est électro-isolante et conçue pour coopérer électriquement et mécaniquement avec ladite connexion à la terre (4c), **caractérisée en ce que**
la ou les surfaces de la structure de matériau (60) faisant face à une partie centrale de la voie comporte une microstructure devenue rugueuse.

2. Voie (51) selon la revendication 1, dans laquelle la structure de matériau (60) est recouverte, ou se compose, d'un matériau hydrofuge (hydrophobe).

3. Voie (51) selon la revendication 1 ou 2, dans laquelle la microstructure comporte des élévations et/ou des creux ayant une hauteur dans la plage allant de 10 à 20 µm.

4. Voie (51) selon l'une quelconque des revendications précédentes, dans laquelle la microstructure est affectée d'une rugosité de surface ayant un écart moyen de surface (Rₐ) dans la plage allant de 10 à 20 µm.

5. Voie (51) selon l'une quelconque des revendications précédentes, dans laquelle la structure de matériau (60) est traitée avec un lubrifiant hydrofuge.

6. Voie (51) selon la revendication 5, dans laquelle le lubrifiant comprend de l'huile de silicone, de la graisse de silicone, de la graisse de lubrification, de la graisse consistante, des graisses à base d'huile ou des graisses végétales.

7. Voie (51) selon l'une quelconque des revendications précédentes, dans laquelle la structure de matériau (60) se compose d'une matière plastique hydrophobe, telle que le polytétrafluoroéthylène (PTFE) ou le polyéthylène (PE) .

8. Voie (51) selon l'une quelconque des revendications précédentes, dans laquelle une résistance (R1) de la structure de matériau et une résistance (R2) d'une accumulation d'eau dans ladite voie (51), ou rainure, devraient être raccordées en parallèle et soumises à une mesure de résistance afin d'établir si la valeur de résistance dépasse une valeur prédéterminée ou est en dessous de cette dernière.

9. Voie (51) selon la revendication 8, dans laquelle lesdits conducteurs électriques (4a) sont alimentés en courant et peuvent être excités par le biais d'un commutateur à la seule condition que ladite valeur de résistance raccordée en parallèle dépasse la valeur prédéterminée.

10. Construction de voie pour une alimentation électrique de véhicules pouvant être propulsés nt électriquement le long d'un tronçon de route, comprenant une voie (51) selon l'une quelconque des revendications précédentes.

11. Construction de voie selon la revendication 10, dans laquelle la ou les parties de paroi de la voie (51) comprennent une ouverture traversante (90), laquelle ouverture (90) est en communication avec un dispositif de collecte (110) comprenant un tuyau de drainage (120) pour drainer une accumulation d'eau dans la voie (51).

12. Construction de voie selon la revendication 11, dans laquelle l'ouverture est pourvue d'une filtre (101).

13. Construction de voie selon la revendication 11 ou 12, dans laquelle le dispositif de collecte (110) et le tuyau de drainage (120) comprennent un matériau électro-isolant (130), ou se composent de ce dernier.

14. Construction de voie selon l'une quelconque des revendications 11 à 13, dans laquelle le tuyau de drainage (120) comprend un moyen (150) de chauffage et un boîtier thermo-isolant (140).

15. Construction de voie selon l'une quelconque des revendications 10 à 14, comprenant deux voies parallèles (51, 52) selon l'une quelconque des revendications 1 à 9.
